# EUROPEAN PATENT SPECIFICATION

(11) **EP 2 318 193 B1**
(45) Date of publication and mention of the grant of the patent: **19.11.2014**
(21) Application number: 09786793.1
(22) Date of filing: 04.08.2009
(51) Int. Cl.: A01G 13/02, B29C 47/00, A01G 13/00, B29C 65/00, B29C 47/02, B29L 7/00, B29C 47/06

(54) **PLASTIC SHEET REINFORCED AT ITS OUTER EDGES**
RANDVERSTÄRKTE PLASTIKPLANE
FEUILLE EN MATIERE PLASTIQUE AVEC BORDS RENFORCES

(30) Priority: 11.08.2008 IT VR20080089
(43) Date of publication of application: 11.05.2011
(73) Proprietor: PLASTIK SPA, 24061 Albano Sant'Alessandro (IT)
(72) Inventor: CATTANEO, Gianangelo, I-24020 Scanzorosciate (BG) (IT)
(74) Representative: Pes, Matteo
(86) International application number: PCT/IB2009/053383
(87) International publication number: WO 2010/018487

(56) References cited:
- EP-A1- 0 611 643
- EP-A2- 0 273 327
- EP-A2- 0 322 221
- DE-B- 1 079 803
- FR-A1- 2 479 076
- GB-A- 637 085
- GB-A- 2 273 519
- US-A- 3 075 573
- US-A1- 2008 150 701

## Description

### TECHNICAL FIELD

This invention concerns a reinforcement for flexible film to produce sheets for covering agricultural or industrial or similar areas, provided with secure anchoring means.

More specifically, this invention refers to a reinforcing band applied to flexible film used mainly to produce covering sheets, its particular feature being that it is provided with additional reinforcement ribbing, produced at the same time and in the same material as the reinforcing band itself and positioned close to the holes for anchoring the sheet and which can advantageously be formed by simple hot cutting, therefore even without metal reinforcement rings.

According to the invention, it is therefore foreseen that the outer longitudinal reinforcing bands of the flexible film are provided, with different methods although mainly by hot extrusion, with at least one ribbing in the same material as the film, in an area immediately adjacent to the holes.

This invention can be applied in the field of production of covering sheets, in particular sheets in polyethylene material for covering agricultural areas, typically for intensive plant growing both in the food and ornamental sectors or other sectors including the covering of industrial areas.

### BACKGROUND ART

It is known that, in the agricultural sector, covering sheets are used to protect crops from atmospheric conditions and in more specific cases to implement production techniques such as the control of product ripening processes.

With the advent of plastic materials, thanks to the inexpensiveness and the versatile performance of this type of material, the possibilities of use of this type of covering have increased considerably.

To fix these sheets to the supporting structures, holes are made along two sides of the sheet for the anchoring cords to pass through.

The method by which these holes are made plays an extremely important role in this sector, since they must satisfy the necessary characteristics of ensuring secure anchoring over the cultivated area especially when considering atmospheric conditions such as wind, hail and other events, which place the cultivated areas under considerable difficulty.

It is for this reason that operators in the sector have paid particular attention to the methods for producing these holes or metal eyelets, and it was thought that since the anchoring strain of the sheets is concentrated on these holes, then the holes would be subject to easy tearing unless reinforced by rivets to form the typical metal "eyelets".

The "eyelet-punching" process was originally carried out by hand and then at a later date by automatic machines.

Eyelet-punching of these sheets by hand was not only unreliable, being conditioned by the ability of the worker, but also very expensive due to the labour it required.

Both types of method also present a series of drawbacks, mainly regarding the cost of the raw materials for the metal eyelets as well as problems concerning the regeneration of the material as will be described below.

The resistance of the holes made in the reinforced areas was increased by the application of actual reinforcement ribbing made from different material and with necessarily higher melting temperatures with respect to the reinforcing band, with the ribbing being inserted in the band during its extrusion or by means of glueing or other band fixing techniques. These methods, however, compromise the possible regeneration of the material.

In this case, the finished product is above all not esthetically presentable since it produces numerous creases in the area of the ribbing and the band, which also create irregular thicknesses that compromise the process of rolling up and folding the sheet.

In addition, the presence of the ribbing and/or the metal eyelets makes the sheet non-uniform as regards the materials used, and production of the sheet with different materials makes the recycling and recovery of usable materials difficult if not impossible.

Document DE-B-1079803 discloses a reinforcement band according to the preamble of claim 1 which is to be coupled to a covering sheet of a tent or of a vehicle, said reinforcement band being made of plastic, whereby the covering sheet may be made of different materials, including plastic. The reinforcement band may be coupled to said covering sheet through stitching, glueing or welding techniques. Furthermore, the reinforcement band is provided with a series of holes obtained by punching.

### DESCRIPTION OF THE INVENTION

This invention proposes to provide a reinforcement for flexible film to produce sheets for covering agricultural or industrial or similar areas, provided with secure anchoring means, that can eliminate or at least reduce the drawbacks described above.

The invention also proposes to provide a reinforcement for flexible film used to produce sheets for covering agricultural or industrial or similar areas, provided with secure anchoring means, that is simple to produce and at the same time totally reliable, with all the requirements for a possible rapid circulation on the market.

This is achieved by a flexible plastic sheet equipped at its outer edges with reinforcement bands as it is defined in the independent claim 1.

The dependent claims of the solution in question describe advantageous embodiments of the invention.

The main advantages of this solution, in addition to those deriving from its construction simplicity, concern first of all the fact that the reinforcement for film for covering sheets according to the invention comprises holes without metal eyelets for the anchoring cords to pass through, and additional reinforcement ribbing formed during the hot extrusion at the same time as the sheet reinforcing band and preferably from the same plastic material as the sheet.

The ribbing is formed by the use of special and appropriately shaped extrusion and calendaring units.

The resulting product is thus extremely resistant to strain during traction of the cords, and the holes through which the cords pass can be slightly ovalised without tearing, since the tearing line encounters the reinforcement ribbing which is part of the sheet and made from the same material.

### DESCRIPTION OF THE DRAWINGS

Other features and advantages of the invention will become clear on reading the description given below of one embodiment of the invention, given as a non-binding example, together with the help of the accompanying drawings, in which:

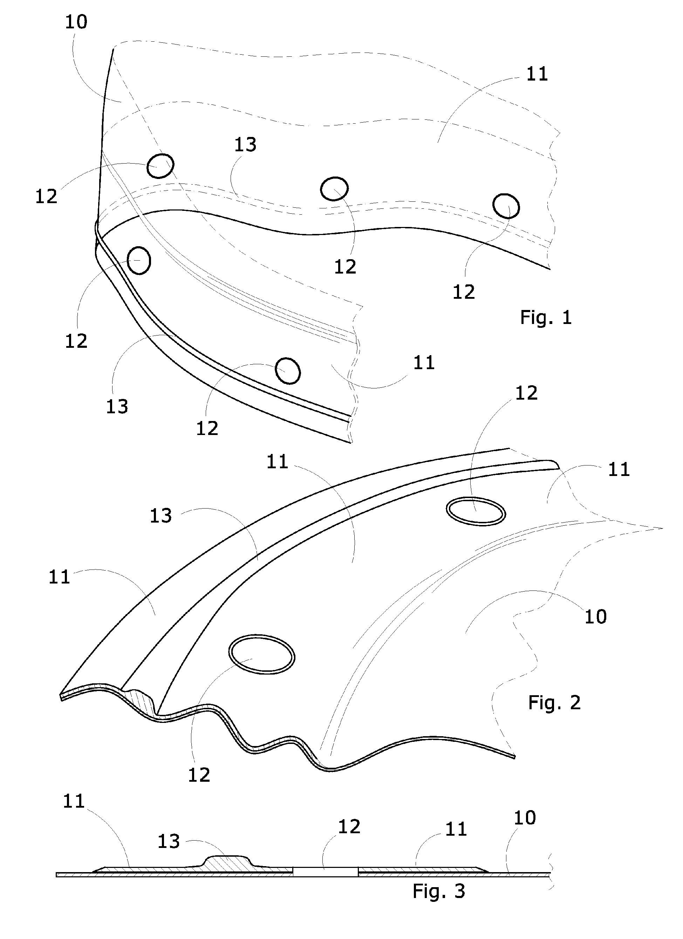

- figure 1 represents a schematic and prospective view of one of the flaps of the covering sheet according to the invention, provided with a reinforcing band and reinforcement ribbing positioned close to the holes through which the secure anchoring cords pass;
- figure 2 represents a schematic view of the edge of the covering sheet on which the reinforcement ribbing is applied close to and below the holes near the edge of the sheet;
- figure 3 shows a schematic cross-section view of a covering sheet according to the invention.

### DESCRIPTION OF ONE EMBODIMENT OF THE INVENTION

With reference to the accompanying drawings, the flexible film for covering agricultural or industrial or similar areas, provided with secure anchoring means, is indicated overall with the reference number 10 and substantially consists of an appropriately sized sheet made from plastic material such as polyethylene or similar.

The plastic sheet or film 10 is made by means of known hot extrusion processes according to predetermined lengths and in shapes that are suitable to be rolled up or folded.

According to the invention, the outer edges of the covering sheet 10 are equipped with reinforcing bands 11 provided with a series of consecutive holes 12 positioned at an appropriate distance from each other.

The holes 12 are formed by means of the hot cutting technique and are not provided with eyelets or other types of reinforcement since the hot cutting technique forms raised edges which themselves determine a certain tear resistance.

According to the invention, during the hot extrusion of the reinforcing bands, the reinforcement ribbing 13 is formed at the same time, providing additional reinforcement for the holes.

This technique foresees that in the extrusion area of the machine and at the point in which the reinforcing band 11 and the ribbing 13 are applied, the extrusion production line is appropriately shaped and dimensioned in order to form the band and the ribbing according to the required dimensions.

The distance between the ribbing 13 and the holes 12 can be a few millimetres, to allow the cord inserted in the hole 12 to exert a certain tension on the hole and a slight ovalisation which terminates against the ribbing.

This construction method is extremely advantageous both from a production point of view and in terms of economy, and it can in fact be understood that, made in this way, the covering sheet not only presents the appropriate features of tear resistance but also has extremely limited production costs, with all the ensuing advantages.

The ribbing 13 can also be flanked by one or more additional lines of ribbing made with the same technique described above, and the distance between the holes 12 and the ribbing 13 can be adjusted to suit requirements.

The production process can also include continuous ultrasonic or hot welding of a film that can protect the covering sheet when it is not being used for its purpose and is rolled up at one side of the supporting structure.

According to other embodiments of the invention, it can be provided with a system for the electronic recording of data relative to the individual covering sheets, by means of the insertion of miniaturised printed circuits, magnetic strips or other equivalent data storing means that are inserted automatically during production of the covering sheet, preferably in the central reinforcing band.

The invention is described above with reference to a preferred embodiment. It is nevertheless clear that the invention is susceptible to numerous variations that lie within the scope of the attached claims.

## Claims

1. A flexible plastic sheet (10) obtained through a hot extrusion process, used for covering agricultural or industrial or similar areas, the outer edges of said sheet (10) being equipped with reinforcement bands (11) coupled to said sheet (10) and also obtained through a hot extrusion process, said flexible plastic sheet (10) and said reinforcement bands (11) being provided with a series of consecutive and coincident holes (12) positioned at an appropriate distance from each other in order to allow the passage of anchoring cords, in which each reinforcement band comprises at least one integral reinforcement ribbing (13) made from the same material as the reinforcement band, **characterised in that** said flexible plastic sheet (10) and said reinforcement bands (11) are made of the same plastic material, in order to enhance recycling and recovery of usable materials, **in that** said reinforcement ribbing (13) is positioned at a distance and along the series of consecutive holes (12) and **in that** said holes are without metal eyelets.

2. Flexible plastic sheet (10) according to claim 1, in which said plastic material is polyethylene.

3. Flexible plastic sheet (10) according to claim 1 or 2, in which said holes (12) have been obtained by means of hot cutting technique whereby integral raised edges with an elevated tear resistance are formed.

4. A flexible plastic sheet (10) according to any one of the preceding claims, **characterised in that** said reinforcement bands (11) are provided with multiple parallel ribbings (13).

5. A flexible plastic sheet (10) according to any one of the preceding claims, **characterised in that** said reinforcement bands (11) are provided with a system for the electronic recording of the data relative to the individual covering sheets, said system comprising miniaturised printed circuits, magnetic strips or other equivalent data storing means, said system being embedded into said reinforcement bands (11) during said hot extrusion process.

## Patentansprüche

1. Flexible Kunststoffolie (10), welche durch Heißextrusion hergestellt und zur Abdeckung von landwirtschaftlichen Flächen oder Industriegebieten o. ä. verwendet wird, wobei die äußeren Ränder der besagten Folie (10) mit Verstärkungsbändern (11) verschen sind, welche mit der besagten Folie (10) gekoppelt und auch durch Heißextrusion hergestellt werden, wobei die besagte flexible Kunststofffolie (10) und die besagten Verstärkungsbänder (11) mit einer Serie von aufeinanderfolgenden und zusammenfallenden Löchern (12) versehen sind, die mit einem geeigneten Abstand zueinander angeordnet sind, um den Durchgang von Verankerungsseilen zu erlauben, wobei jedes Verstärkungsband mindestens eine integrale, aus dem gleichen Material wie das Verstärkungsband hergestellte Verstärkungsrippung aufweist (13), **dadurch gekennzeichnet, dass** die besagte flexible Kunststofffolie (10) und die besagten Verstärkungsbänder (11) aus demselben Kunststoffmaterial hergestellt sind, um das Recycling sowie die Rückgewinnung der verwendbaren Materialien zu verbessern, dass die besagte Verstärkungsrippung (13) mit Abstand und entlang der Serien der aufeinanderfolgenden Löcher (12) angeordnet ist und dass die besagten Löcher keine Metallösen haben.

2. Flexible Kunststofffolie (10) nach Anspruch 1, wobei der Kunststoff aus Polyethylen ist.

3. Flexible Kunststofffolie (10) nach Anspruch 1 oder 2, bei der die besagten Löcher (12) durch Heißschneidetechnik hergestellt werden, wobei erhöhte Ränder mit hoher Reißfestigkeit gebildet werden.

4. Flexible Kunststofffolie (10) nach einem der vorherigen Ansprüche, **dadurch gekennzeichnet, dass** die besagten Verstärkungsbänder (11) mit mehrfachen Parallel-Verrippungen (13) versehen sind.

5. Flexible Kunststoffolie (10) nach einem der vorherigen Ansprüche, **dadurch gekennzeichnet, dass** die besagten Verstärkungsbänder (11) mit einem System zur elektronischen Aufzeichnung der zu den einzelnen Abdeckfolien gehörenden Daten versehen sind, wobei das besagte System miniaturisierte gedruckte Schaltungen, magnetische Streifen oder andere gleichwertige Datenspeicherungsmittel umfasst, wobei das besagte System in den besagten Verstärkungsbändern (11) während des besagten Heißextrusionprozesses eingebettet wird.

## Revendications

1. Feuille en matière plastique souple (10) obtenue par un procédé d'extrusion à chaud, utilisée pour recouvrir des aires agricoles ou industrielles ou similaire, les bords extérieurs de ladite feuille (10) étant équipés de bandes de renfort (11) accouplées à ladite feuille (10) et également obtenues par un procédé d'extrusion à chaud, ladite feuille de matière plastique flexible (10) et lesdites bandes de renfort (11) étant munies d'une série de trous consécutifs et coïncidents (12) positionnés au niveau d'une distance appropriée l'un de l'autre afin de permettre le passage de cordes pour l'ancrage, dans laquelle chaque bande de renfort comprend au moins une nervure de renfort intégrée (13) du même matériau que la bande de renfort, **caractérisée en ce que** ladite feuille en matière plastique souple (10) et lesdites bandes de renfort (11) sont du même matériau plastique, afin d'améliorer le recyclage et la récupération des matériaux utilisables, **en ce que** ladite nervure de renfort (13) est positionnée au niveau d' une certaine distance et le long de la série de trous consécutifs (12) et **en ce que** lesdits trous sont sans oeillets métalliques.

2. Feuille en matière plastique souple (10) selon la revendication 1, dans laquelle ladite matière plastique est polyéthylène.

3. Feuille en matière plastique souple (10) selon la revendication 1 ou 2, dans laquelle lesdits trous (12) ont étés obtenus par une technique de découpage à chaud au moyen duquel sont formés des bords intégrés avec une haute résistance à la déchirure.

4. Feuille en matière plastique souple (10) selon l'une quelconque des revendications précédentes, **caractérisé en ce que** lesdites bandes de renfort (11) sont munies de plusieurs nervures parallèles (13).

5. Feuille en matière plastique souple (10) selon l'une quelconque des revendications précédentes, **caractérisé en ce que** lesdites bandes de renfort (11) sont munies d'un système d'enregistrement électronique des données concernant les feuilles de couverture individuelles, ledit système comprenant des circuits imprimés miniaturisés, bandes magnétiques ou autres moyens de mémorisation, ce système étant incorporé dans lesdites bandes de renfort (11) pendant ledit procédé d'extrusion à chaud.
